(19) **Europäisches Patentamt**
**European Patent Office**
**Office européen des brevets**

(11) **EP 1 668 946 B1**

(12) **EUROPEAN PATENT SPECIFICATION**

(45) Date of publication and mention
of the grant of the patent:
**05.12.2012 Bulletin 2012/49**

(51) Int Cl.:
**H04W 36/18** *(2009.01)* **H04W 36/30** *(2009.01)*

(21) Application number: **04768729.8**

(22) Date of filing: **01.10.2004**

(86) International application number:
**PCT/GB2004/004188**

(87) International publication number:
**WO 2005/034562 (14.04.2005 Gazette 2005/15)**

(54) **SOFT HANDOVER**

Zellwechsel mit gleichzeitig zu beiden Basisstationen bestehenden Verbindungen

DIVERSITÉ DE TRANSMISSION PENDANT UN TRANSFERT INTERCELLULAIRE SANS COUPURE

(84) Designated Contracting States:
**DE FR GB**

(30) Priority: **03.10.2003 GB 0323199**

(43) Date of publication of application:
**14.06.2006 Bulletin 2006/24**

(73) Proprietor: **FUJITSU LIMITED**
**Kawasaki-shi,**
**Kanagawa 211-8588 (JP)**

(72) Inventor: **ABEDI, Saied**
**Reading,**
**Berkshire RG1 4LS (GB)**

(74) Representative: **Hitching, Peter Matthew**
**Haseltine Lake LLP**
**Lincoln House, 5th Floor**
**300 High Holborn**
**London**
**WC1V 7JH (GB)**

(56) References cited:
**EP-A- 1 284 583     WO-A-01/24568**

**Description**

The present invention relates to soft handover techniques for use in cellular communications systems.

In a cellular mobile communications system, each base station has associated with it a cell covering a certain area (a "footprint"). A user equipment within the coverage area of the cell communicates with the system by transmitting radio signals to, and receiving radio signals from, the base station associated with the cell. The shapes and sizes of different cells can be different and may vary over time. The respective coverage areas of adjacent cells generally overlap with one another so that at any given time, a user equipment may be capable of communicating with more than one base station.

If a user equipment is located in a region where two or more cells overlap, then a soft handover may take place between those cells. During soft handover, a user equipment is in communication with two or more base stations concurrently. Soft handover is used to enable a controlled handover to take place when a user equipment moves from one cell to another, and to take advantage of overlapping cell coverage to increase signal quality. If the user equipment remains in a soft handover region, then it can continue to take advantage of the base station diversity indefinitely.

During soft handover, the user equipment maintains a list of active base stations and candidate base stations. The active base stations are those which are involved in the soft handover operation, i.e. those to which the user equipment transmits its data. The candidate base stations are base stations of which the user equipment is aware, but which are determined not to be suitable for data transmission. In known soft handover techniques, the decision as to which base stations should be involved in the soft handover operation is made based on measures of signal qualities in the respective cells. For example, the user equipment may measure the qualities of signals received from various base stations and use those measures to determine which of the base stations should be active base stations. The selection of the active base stations is updated as the signal from one base station weakens and that from another base station strengthens.

In the known soft handover techniques, the selection of a base station for soft handover is made based on the conditions prevailing in the cell served by that base station, see, for example, EP 1 284 583, or WO 01/24568 in which cell selection is made based on congestion or quality of service in the cell. However, it has been realised pursuant to the present invention that the base station selection process in soft handover can be made more effective by also considering other factors.

In accordance with a first aspect of the invention there is provided a method of selecting a base station as an active base station for use during soft handover, the active base station being for receiving data from a source user equipment for onward transmission to a destination user equipment, the method comprising:

> determining a measure of a quality of service from the base station to the destination user equipment; and
> selecting the base station as an active base station based on the measure of the quality of service.

By selecting an active base station based on a measure of the quality of service from the base station to the destination user equipment, it may be possible to select as an active base station the base station (s) which will give the best overall performance through to the destination user equipment. In this way the soft handover selection process can be made more effective.

Preferably the method further comprises the steps of determining a credit value based on the measure of the quality of service, and transmitting the credit value from the base station to the source user equipment. This can provide a convenient mechanism for allowing the user equipment to select an active base station. Preferably the source user equipment receives the credit value from the base station and selects a base station as an active base station based on the credit value. Alternatively, the selection of an active base station may be made by a radio network controller (RNC). In this case the base station may transmit credit values to the RNC.

A credit value may be determined for each of a plurality of source user equipments. This can allow the soft handover decision to be based not just on how well one particular user equipment is performing in terms of quality of service through to its destination user equipment, but also based on how well other user equipments are performing. In this way the soft handover decision can be at least partially based on the amount of congestion that is being experienced by the base station. For example, a base station which is experiencing heavy congestion can be avoided, even if the channel quality from the user equipment to the base station is good.

In order to obtain a good indication of the quality of service, two or more different factors may be taken into account. Thus a plurality of different measures of the quality of service from the base station to a destination user equipment may be determined. As an example, one or more of the following measures of quality of service may be determined: throughput ratio; ratio of satisfied packets; and base station buffer occupancy, although other measures may be used instead of or in addition to these. For example, the number of retransmission requests received by the base station from the destination UE could be used as a measure of the quality of service.

In a preferred embodiment of the invention, the soft handover decision is based on how well the user equipment is performing in relation to other user equipments. Therefore a credit value may be determined for each of a plurality of source user equipments by comparing measures of a quality of service from the base station to a plurality of destination user equipments. As discussed above, this can allow the amount of congestion experienced by the base station to be a factor in the soft handover decision.

Furthermore, by arranging the credit value to be a relative credit value, the amount of transmission between the base station and the user equipment is reduced, since the need to transmit absolute values to the user equipment can be avoided.

As an example, the credit value may be based on at least one of the following relative measures: distance from average throughput; distance from minimum throughput ratio; distance from minimum quality of service; and distance from minimum buffer length.

Other relative measures could be used as well as or instead of any of these measures.

In order to reduce the amount of data which needs to be transmitted from the base station to the user equipment, where the credit value is based on a plurality of relative measures, the credit value may be a single value obtained by combining the relative measures.

In another embodiment of the invention, the credit value is based on one or more absolute measures of a quality of service, combined into a single value if desired.

Preferably, where a source user equipment receives credit values from the base station, the source user equipment selects a base station as an active base station based on a history of credit values. This can allow long term trends to be taken into account, and may prevent spurious soft handover decisions from being taken. For example, a source user equipment with an improving history of credit values from a base station may select that base station as an active base station, while a source user equipment with a worsening history of credit values from a base station may deselects that base station as an active base station.

Preferably a base station is selected as an active base station based additionally on a measure of radio channel conditions from a source user equipment to the base station. This can allow a base station with good radio channels conditions to be selected in preference to one with poor conditions. The source user equipment may select a base station as an active base station based on a history of radio channel conditions. This may improve the soft handover decision making process. For example, if the history of the radio channels conditions shows that the radio channel is getting consistently worse, then it may be inferred that slow fading is taking place, in which case that base station may be deselected as an active base station. If the history shows continuous swings between good and bad radio channel conditions, then it may be inferred that fast fading is taking place, and a base station which is not experiencing such conditions may be selected as an active base station in preference.

Where the selection step is carried out by a user equipment, the method may further comprise a step of transmitting an indication of the base station being selected from the user equipment to the base station. The indication may be, for example, an identification number of the selected base station, or a flag indicating whether or not a particular base station is selected.

The method may further comprise the step of scheduling uplink transmissions in dependence on the measure of a quality of service.

In a connecting United Kingdom patent application in the name of Fujitsu Limited entitled "Uplink Scheduling", an uplink scheduling technique is described in which knowledge of the quality of packet delivery in the downlink is used in scheduling uplink transmissions. To achieve this, the base station transmits a credit value to each source user equipment, the credit value being based on a measure of the relative quality of packet delivery in the downlink to each destination user equipment. The source user equipments then schedule their uplink transmissions to the base station in dependence on the credit value which they receive. This technique may improve the overall performance of the system.

In a preferred embodiment of the invention, the same credit values which are transmitted from the base station to the source user equipment for the purposes of scheduling uplink transmissions are also used in soft handover decisions. Thus, the method may further comprise the step of scheduling uplink transmissions in dependence on the credit value. For example, the source user equipment may determine a time and/or rate of packet transmission based on the credit value. If the credit values are being transmitted anyway for the purposes of scheduling the uplink transmissions, then using the credit values when making soft handover decisions can allow the decisions to be based on the quality of service from the base station to the destination user equipment, without the need to transmit extra information from the base station to the source user equipment. In this way uplink scheduling and soft handover can both be enhanced through use of the same credit values which are transmitted by the base station.

Any of the above steps may be repeated periodically, for example, a new credit value may be determined periodically and sent to the source user equipment.

The base station may transmit data to a destination user equipment in its downlink, or to a destination user equipment via a network, such as a radio network subsystem, a core network, a public switched telephone network, or an IP-based network.

According to a second aspect of the invention there is provided a base station for receiving data from a source user equipment for onward transmission to a destination user equipment, the base station comprising:

means for determining a measure of a quality of service from the base station to the destination user equipment;
means for producing a credit value based on the measure of the quality of service;
means for transmitting the credit value to the source user equipment;
means for receiving from the source user equipment an indication of whether the base station has been selected as an active base station; and
means for allocating a channel to the source user equipment if the base station has been selected as an active base station.

In the second aspect, a credit value may be determined for each of a plurality of source user equipments. The credit value may be based on a plurality of different measures of the quality of service from the base station to a destination user equipment. A credit value may be determined for each of a plurality of source user equipments by comparing measures of a quality of service from the base station to a plurality of destination user equipments. The credit value may be based on a plurality of relative measures, and may be a single value obtained by combining the relative measures.

According to a third aspect of the invention there is provided a user equipment for transmitting data to a destination user equipment via one or more base stations using soft handover, the user equipment comprising:

means for receiving a credit value from a base station, the credit value being based on a measure of a quality of service from the base station to the destination user equipment; and
means for selecting a base station as an active base station based on the credit value.

The user equipment may further comprise means for storing a history of credit values, and the selecting means may be arranged to select a base station as an active base station based on the history of credit values.

The user equipment may further comprise means for determining a measure of radio channel conditions from the user equipment to the base station, and the selecting means may be arranged to select a base station as an active base station based additionally on the measure of radio channel conditions. The user equipment may further comprise means for storing a history of radio channel conditions, and the selecting means may be arranged to select a base station as an active base station based on the history of radio channel conditions.

The user equipment may further comprise means for transmitting an indication of the base station being selected to the base station.

The user equipment may further comprise means for scheduling uplink transmissions in dependence on the credit value.

The invention also provides a communications system comprising a base station according to the second aspect and a user equipment according to the third aspect.

In any of the above aspects, the various features may be implemented in hardware, or as software modules running on one or more processors. Features of one aspect may be applied to any of the other aspects. Method features may be provided with the apparatus aspects and vice versa.

Preferred features of the present invention will now be described, purely by way of example, with reference to the accompanying drawings, in which:-

Figure 1 shows an overview of a cellular mobile communications system;
Figure 2 shows a situation in which a base station serves destination user equipments in its downlink;
Figure 3 shows a situation in which a base station serves destination user equipments via a radio network subsystem;
Figure 4 shows a situation in which a base station serves destination user equipments via an IP-based network;
Figure 5 shows parts of a base station in an embodiment of the invention;
Figure 6 shows parts of a credit value calculation unit;
Figure 7 shows parts of a user equipment in an embodiment of the invention;
Figure 8 shows parts of a combined metric calculation unit; and
Figure 9 shows an example of the operation of an embodiment of the invention.

## Overview of a cellular communications system

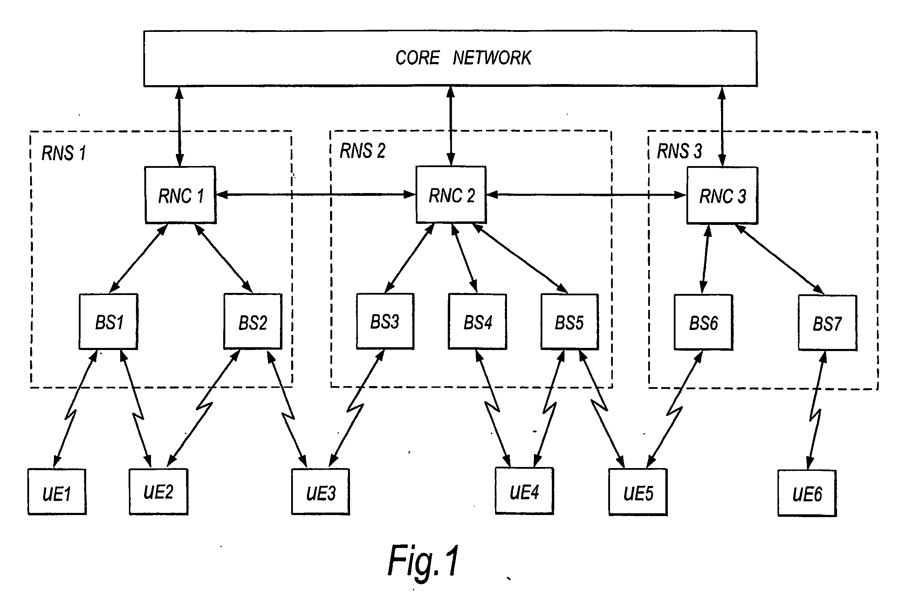

Figure 1 shows an overview of a cellular mobile communications system. The system is designed in particular for use with the UMTS (Universal Mobile Telecommunications System) Terrestrial Access Network (UTRA) standard. The system consists of a number of radio network subsystems (RNSs) connected to a core network. The radio network subsystems handle all radio-related functionality, while the core network is responsible for switching and routing calls and data connections to external networks. Each radio network subsystem comprises a radio network controller (RNC) connected to a number of base stations (BS). The base stations manage the radio links with the user equipments (UEs) within their area of coverage (cells). The radio network controller manages the use of radio resources of its cells; for example it is responsible for hard handover decisions and load control.

Data is transmitted between the base stations and the UEs over the air using code division multiple access (CDMA). In CDMA, each channel to be transmitted is spread over a wide spectrum using a unique spreading code. At the receiver the received signal is despread back to the original signal using a replica of the spreading code. By using different spreading codes for different channels, the various channels may be transmitted simultaneously in the same frequency band. Generally the spreading codes are chosen to be orthogonal in order to minimise interference between the channels. CDMA may be used in combination with other multiplexing techniques, such as frequency division multiplexing and time division multiplexing. Each transmission channel may be one of a dedicated channel (reserved for a single user), a common channel (used by all users in a cell) or a shared channel (shared between a number of users on a time division multiplex basis). Beamformers may also be used in either direction to provide directional beams (space division multiplexing).

Referring to Figure 1, it can be seen that there are various possible paths that can be taken for data transmission between two UEs. For example, if UE2 wishes to transmit data to UE1, it can choose either or both of BS1 and BS2 as its active base station. If UE2 chooses BS1 as its active base station, BS1 can transmit data packets from UE2 directly to UE1 without the need for the data packets to be routed through the network. However, if UE2 chooses BS2 as its active base station, then the data packets from UE2 must be routed via RNC1 to BS1 and thence to UE1. Similarly, if UE3 wishes to transmit data to UE6, it can choose either or both of BS2 and BS3 as its active base station. If UE3 chooses BS2 as its active base station, then the data packets need to be transmitted via RNC1 and the core network to RNC3 and thence to BS7. However, if UE3 chooses BS3 as its active base station, the data packets are routed via RNC2. Since, as shown in Figure 1, RNC2 is linked to RNC3, the data packets can be routed to RNC3 without the need to go through the core network. Thus it can be seen that the path that a data packet must take from a source UE to a destination UE depends on the choice of active base station.

**Embodiments of the invention**

In embodiments of the invention, knowledge of the quality of the link experienced by a destination UE (either through the network, downlink or other base stations) from each one of the active or candidate base stations in a handover set, is combined with knowledge about the UE's radio channel quality to the candidate base station. A soft handover decision is then made with the simultaneous involvement of all the critical aspects of quality of service (QoS) provision in a wireless packet system, such as packet delivery delay, QoS, and packet drop rate.

It is assumed that the $i$-th source UE in soft handover mode is being served by number of active and candidate base stations in the soft handover set.

$$SHO\_SET_i = \left\{ Active\_Node\_B_p, Candidate\_Node\_B_q \right\}, \quad p = 1 \cdots P \quad q = 1 \cdots Q \qquad (1)$$

where $SHO\_SET_i$ represents the set of active and candidate base stations, $Active\_Node\_Bp$ the active base station (Node-B), $Candidate\_Node\_Bp$ is the number of candidate base stations, $P$ is the number of active base stations, and $Q$ is the number of candidate base stations. Each base station then determines a metric which indicates how well that base station is doing, in terms of on-time delivery of packets, to its intended destination UE.

**Quality of service**

In the present embodiment the follow three quantities related to the quality of service to the destination UEs are monitored:

    1. throughput ratio
    2. ratio of satisfied packets
    3. base station buffer occupancy

## 1. Throughput ratio

When the base station receives a data packet from a source UE, it stores that data packet in a buffer for transmission to the destination UE. If that data packet is not transmitted to the destination UE within a certain time, or within a certain number of attempts, then the data packet is dropped from the buffer and never gets delivered. This situation arises if there is heavy competition for the downlink channels and the base station is making scheduling decisions which result in not all of the packets being transmitted.
The throughput ratio for a particular UE is the number packets which are successfully delivered to the destination UE divided by the number of packets intended for that UE which are received by the base station.

For the nth UE the throughput ratio is defined as

$$Th_n(m) = \frac{\left(Oct_{Received}(m)\right)_n}{\left(Oct_{Arrived\_Node\_B}(m)\right)_n} \ , \ n = 1...N \qquad (2)$$

where $N$ is the total number of the source UEs in the uplink and $m$ represents the number of the scheduling event (e.g. the Transfer Time Interval), $Oct_{Received}(m)$ is the number of successfully delivered packet data units or octets to the nth destination UE at downlink and $(Oct_{Arrived\_Node\_B}(m))_n$ represents the number of intended octets to the nth destination UE, sent by the corresponding UE and saved in the FIFO buffer at the base station (Node-B).

## 2. Ratio of satisfied packets

For many services a tolerance threshold is set for the total transmission time from the source UE to the destination UE. For example, video services may have a tolerance threshold of 100 ms. If a packet does not arrive at the destination UE within this time, then it is dropped by the destination UE, and is classified as a failed packet. The ratio of satisfied packets is the number of satisfied packets (i.e. the number of packets which are received by the UE and not classified as failed) divided by the total number of packets received at the base station for that UE.

The algorithm in the present embodiment gives an indication of the total quality of service (QoS). Therefore, for each UE the number of QoS satisfied received octets is determined as,

$$Oct_{Received\_Satisfied\_QoS_n}(m) = Oct_{Received_n}(m) - Oct_{Received\_Failed\_QoS_n}(m), \ n = 1...N$$

$$(3)$$

where n represents the UE index, $Oct_{Received\_Satisfied\_QaS_n}(m)$ is the number of QoS-satisfied octets which are delivered successfully within the delay threshold limit assigned and $Oct_{Received\_Failed\_QoS_n}(m)$ is the number of received QoS-failed octets for $n$th UE at the $m$th scheduling event.

For each UE the portion of throughput which is satisfied in terms of the QoS is defined as

$$Ratio\_Satisfy\_QoS_n(m) = \frac{Oct_{Received\_Satisfied\_QoS_n}(m)}{Oct_{Arrived\_Node\_B_n}(m)} \ , \ n = 1...N \qquad (4)$$

where $Oct_{Arrived\_Node\_B_n}$ is the number of originally delivered octets to the source queue of the $n$th UE at the base station. When no packet has arrived for the $n$th UE, or its queue is empty, it is assumed that $Ratio\_Satisfy\_QoS_n(m) = 0$ for that UE.

## 3. Buffer occupancy

As packets arrive at the base station from a source UE they are buffered on a first-in-first-out basis for transmission to the destination UE. The buffer occupancy for a particular destination UE is the number of packets for that UE which are buffered at the base station.

For each UE the current FIFO buffer length is updated for the current uplink scheduling event as

$$FIFO\_Length_n(m) = \left(Oct_{Arrived\_Node\_B}(m)\right)_n - \left(Oct_{Received}(m)\right)_n, \quad n=1...N$$

$$(5)$$

The above qualities are updated for each uplink scheduling event. This might be at a rate of every TTI, or for every scheduling event in the downlink, or at some other interval. For example, they may be calculated every two or more TTIs to reduce the delay introduced to the uplink by the reporting process.

**Relative profile**

At this stage the base station has determined three quality indicators for each of the destination UEs. In one embodiment of the invention, these three quality indicators are sent to the user equipment for use in soft handover decisions. Alternatively, a single value based on these three quality indicators is sent to the user equipment. However, in another embodiment of the invention, these three quality indicators are used to determine a number of relative quality indicators for each destination UE. The relative quality indicators give an indication of where each UE stands in terms of quality of service in relation to other UEs. This can allow the amount of congestion which is being experienced by the base station to be a factor in the soft handover decision.

In the present embodiment the following four relative quality indicators are used.

1. distance from average throughput ratio
2. distance from minimum grouped throughput ratio
3. distance from minimum grouped quality of service
4. distance from minimum grouped buffer length

1. Distance from average throughput ratio

The base station determines the distance of the throughput ratio of each destination UE from the average throughput. The average throughput is defined as

$$Avg\_Th(m) = \frac{1}{N}\sum_{n=1}^{N} Th_n(m)$$

$$(6)$$

The distance of the throughput ratio of the $n$-th UE itself is computed as

$$Distance\_Avg_n(m) = 1 + Th_n(m) - Avg\_Th(m) \quad n=1...N$$

$$(7)$$

Assuming that maximum distance average at this stage is defined as

$$Distance\_Avg_{max} = max\left(Distance\_Avg_n(m)\right), \quad n=1...N$$

$$(8)$$

then the distance of the throughput ratio can be normalized as follows

$$Norm\_Distance\_Avg_n(m) = 1 - Distance\_Avg_n(m) / Distance\_Avg_{max}$$

$$(9)$$

Since the quantities involved in the final credit value might have different numeric ranges, it is desirable to map their original distance value ranges to similar ranges. This prevents an unbalanced situation in which one distance quantity can be dominant. For example the distance from average throughput may be around 0.1 while the QoS distance for video service might always take a value nearer to 0.01. To create a homogeneous behaviour for the uplink scheduling decisions the following secondary mathematical metric is introduced:

$$Distance\_Avg\_Th_n(m) = Norm\_Distance\_Avg_n(m) / \sum_{i=1}^{N} Norm\_Distance\_Avg_i(m) \qquad (10)$$

This metric gives an indication of where the UE stands compared to the average throughput ratio.

2. Distance from minimum grouped throughput ratio

To determine this metric the UEs are first grouped into different classes based on the delay threshold. For example, video services may have a low delay threshold, while web services may have a relatively high delay threshold, and therefore these services may be classified into different groups.

It is assumed that the $j$-th group includes $m_j$ UEs. Assuming the n-th UE belongs to the $j$-th group, the normalised grouped throughput ratio is defined as

$$Norm\_Th_n(m) = Th_n(m) / Th_{max,j}(m), \qquad n=1...N \qquad (11)$$

where $Th_{max,j}(m)$ is the maximum throughput ratio of the jth group so far. The throughput ratio distance is determined form minimum normalised throughput ratio of each group so that

$$Norm\_Distance\_min\_Th_n(m) = Norm\_Th_n(m) - Norm\_Th_{min,j}(m), \qquad n=1...N \qquad (12)$$

To increase the homogeneous behaviour of the metric, this distance is also subject to a secondary normalised and mathematical mapping, in a similar way to the average throughput distance, so that

$$Distance\_min\_Th_n(m) = Norm\_Distance\_min\_Th_n(m) / \sum_{i=1}^{N} Norm\_Distance\_min\_Th_i(m)$$

This metric gives an indication of how well each UE is doing in terms of throughput ratio compared to the UE that has the worst throughput among all the UEs in current service group. By calculating both the distance from average throughput and distance from minimum throughput, an indication of how distributed the qualities of services are is obtained.

3. Distance from minimum grouped QoS

To determine this metric a normalised quality of service is first calculated, as follows

$$Norm\_QoS_n(m) = Ratio\_Satisfy\_QoS_n(m) / Ratio\_Satisfy\_QoS_{max,j}(m), \qquad n=1...N \qquad (14)$$

where $Ratio\_Satisfy\_QoS_{max,j}(m)$ is the maximum QoS of the $j$th group with the same service delay tolerance. The throughput ratio distance is determined from the minimum normalised QoS ratio of each group so that

$$Norm\_Distance\_min\_QoS_n(m) = Norm\_QoS_n(m) - Norm\_QoS_{min,j}(m), \quad n=1...N$$

$$( 15 )$$

where $Norm\_QoS_{min,j}(m)$ is the minimum normalised QoS of group $j$. To increase the homogeneous behaviour of the metric this distance is also subject to a secondary normalised and mathematical mapping, similar to the average throughput distance, so that

$$Distance\_min\_QoS_n(m) = Norm\_Distance\_min\_QoS_n(m) / \sum_{i=1}^{N} Norm\_Distance\_min\_QoS_i(m)$$

$$( 16 )$$

This metric gives an indication of how well that UE is doing in terms of QoS compared to the UE that has the worst QoS among all the UEs in the current service group.

<u>4. Distance from minimum grouped buffer length</u>

This metric is used to indicate how much data is currently waiting in the queue assigned to each destination UE, in the base station FIFO, compared to the UE which has the minimum amount of data to transmit and minimum FIFO queue length, within the $j$-th service group. First the normalised buffer length is determined as follows

$$Norm\_FIFO_n(m) = FIFO\_Length_n(m) / FIFO\_Length_{max,j}(m), \quad n=1...N \quad ( 17 )$$

where $FIFO\_Length_{max,j}(m)$ is the maximum buffer FIFO length of the $j$-th group with the same service delay tolerance. The distance of FIFO buffer length is determined from the minimum normalised FIFO length of each group so that

$$Norm\_Distance\_min\_FIFO_n(m) = Norm\_FIFO_n(m) - Norm\_FIFO_{min,j}(m),$$

$$n=1...N \quad ( 18 )$$

where $Norm\_FIFO_{min,j}(m)$ is the minimum normalised FIFO length of group $j$. To increase the homogeneous behaviour of the metric, this distance also becomes subject to a secondary normalised and mathematical mapping, in a similar way to the average throughput distance, so that

$$Distance\_min\_FIFO_n(m) = Norm\_Distance\_min\_FIFO_n(m) / \sum_{i=1}^{N} Norm\_Distance\_min\_FIFO_i(m)$$

$$( 19 )$$

**Single multidimensional credit value**

At this stage the base station has determined four independent quantities related to different aspects of downlink scheduling. All of these quantities have some value between zero and one. These four quantities are then combined to give a single credit value.

In the present embodiment the four quantities are combined in the following way.

$$Distance\_m\ in_n(m) = (1 + Distance\_m\ in\_Th_n(m))(1 + Distance\_m\ in\_QoS_n(m)).$$
$$(1 + Distance\_m\ in\_FIFO_n(m))(1 + Distance\_A\ vg\_Th_n(m))$$
$$, n=1...N \quad (\ 20\ )$$

If the metrics were simply multiplied, and any one of the metrics had a value of zero, then the impact of the other involved metrics would vanish. The value one is added to each metric to prevent this effect. The numeric value of final metric is therefore higher than one. In order to reduce the complexity of uplink scheduling and amount of communication and to represent this credit metric just with one information byte, this value is transformed to become real number which has a numeric value between zero and one. To transform the numeric values first we define

$$New\_Distan\,ce\_min_n(m) = Distance\_m\ in_n(m) - min(Distance\_m\ in_n)\ ,\quad n=1...N$$
$$(\ 21\ )$$

Then the following transform is performed

$$New\_Distan\,ce\_min1_n(m) = Distance\_m\ in_n(m)/max(Distance\_m\ in_n)\ ,\quad n=1...N$$
$$(\ 22\ )$$

and finally

$$Distance\_from\_min_n(m) = Distance\_m\ in1_n(m) - min(Distance\_m\ in1_n)\ ,\quad n=1...N$$
$$(\ 23\ )$$

This is the credit value which has a numeric value between 0 and 1. By multiplying this real number by 100 and picking the integer part, a final credit value with a numeric value between 0 and 100 is obtained for each UE.

Each credit value is then transmitted to the corresponding source UE. The credit value may be transmitted, for example, in the control channel, or as a special byte in a data channel, or by any other means. In this way, the user equipment receives a single value from each of the active and (possibly) candidate base stations, indicating the quality of the link to the destination user equipment.

The above process is repeated at appropriate intervals. For example, the credit value may be calculated for every Time Transmission Interval (TTI), or for every soft handover event, or at some other interval. For example, it may be calculated every two or more TTIs to reduce the delay introduced to the uplink by the reporting process.

It will be appreciated that not all of the indicators described above need necessarily be used, and that other indicators of the quality of service in the downlink channels could be used as well as or instead of the indicators described above.

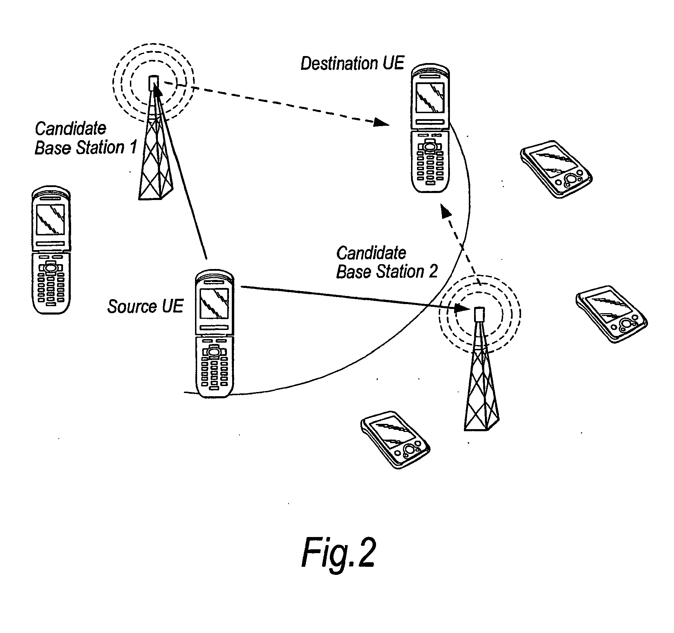

The way in which the various quality of service indicators are obtained will depend on the path that the data packets take to the destination UE. First the situation in which each base station serves the destination UE in its own downlink is considered. An example of this situation is shown in Figure 2. In this case each base station receives an indication of the throughput ratio and the ratio of satisfied packets in a control channel transmitted from the destination UEs to the base station. Each base station determines a metric which explains how well that base station is doing, in terms of on-time delivery of packets, to its intended destination UE:

$$Distance\_m\;in_{n,s}(m) = (1 + Distance\_m\;in\_Th_{n,s}(m))(1 + Distance\_m\;in\_QoS_{n,s}(m))$$
$$(1 + Distance\_m\;in\_FIFO_{n,s}(m))(1 + Distance\_A\;vg\_Th_{n,s}(m))$$

$$s=1...P+Q, \quad n=1...N \qquad (\;24\;)$$

where s indicates the base station number.

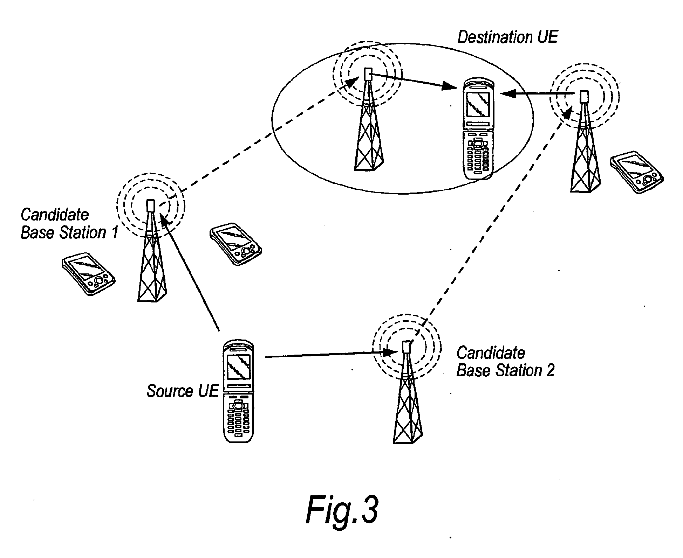

Next, the situation where a candidate base station reaches the destination UE through another base station will be considered. This situation is illustrated in Figure 3. In this situation, although another base station is responsible for the actual downlink transmissions to the destination UE, the candidate base station still needs to provide a metric or credit value indicating how good the overall quality of the link is to the destination UE from that candidate base station. To achieve this, the destination UE sends an indication of the number of delivered packets and the number of satisfied packets for each link back through the network to the base station. In this case the distance is expressed as

$$Distance\_m\;in_{n,s,d}(m) = (1 + Distance\_m\;in\_Th_{n,s,d}(m))(1 + Distance\_m\;in\_QoS_{n,s,d}(m))$$
$$(1 + Distance\_m\;in\_FIFO_{n,s,d}(m))(1 + Distance\_A\;vg\_Th_{n,s,d}(m))$$

$$s=1...P+Q, \quad n=1...N \qquad (\;25\;)$$

where $d$ indicates the base station through which the destination UE is reached and $s$ serves as an identification number for the base station which is calculating the credit value. Thus, the overall quality of the link between the source UE and the destination UE is evaluated, taking into account all of the base stations involved in the link.

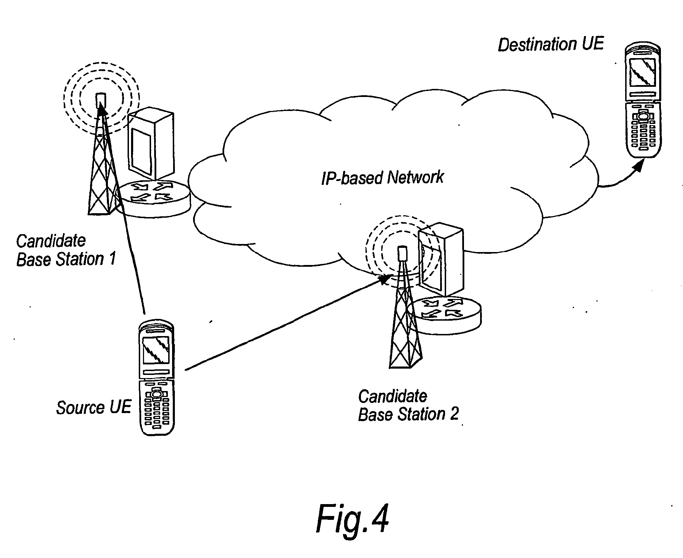

In another possible configuration, the source UE reaches the destination UE through an IP (internet protocol) based network. This situation is shown in Figure 4. In this case the minimum distances and the multidimensional metric are determined assuming that an IP-based network is involved. This value is sent to each source UE every uplink scheduling event (1 TTI).

$$Distance\_m\;in_{n,s,d}(m) = (1 + Distance\_m\;in\_Th_{n,s,Network}(m))(1 + Distance\_m\;in\_QoS_{n,s,Netw}$$
$$(1 + Distance\_m\;in\_FIFO_{n,s,Network}(m))(1 + Distance\_A\;vg\_Th_{n,s,Netw}$$

$$s=1...P+Q, \quad n=1...N \qquad (\;26\;)$$

In certain situations the delay in reporting back through the IP-based network may large, which may result in delays in the soft handover process. In this case, other factors may be used as well or instead of the metrics described above. For example, the amount of data transmitted to the destination UE, or the number of repeat transmission requests received from the destination UE, may be used in determining the quality of the link.

In all three cases (direct connection through the base station, connection through other base stations, or connection through a network), the multidimensional metrics discussed above indicate how successfully the source UE is communicating with its destination UE in terms of different aspects of quality of service. By applying the mathematical mapping/normalization functions discussed above, each base station in the active and candidate set can determine and convert the credit values to a unique multidimensional metric which can be represented by one byte (or two bytes) of information. These mathematical mapping functions are implemented in such a way as to map all of the dimensions involved so as to have similar numeric ranges. The base stations in the active and candidate set send this one byte multidimensional metric, or credit value, to the source UE for use in soft handover decisions.

In some situations a plurality of destination UEs may be present for each source UE. For example, Multimedia Broadcast/Multicast Service (MBMS) is a service which has been proposed in 3GPP which makes it possible for large numbers of users to receive the same high data rate services. The techniques described above may be extended to the case where there are multiple destination UEs.

**Base station**

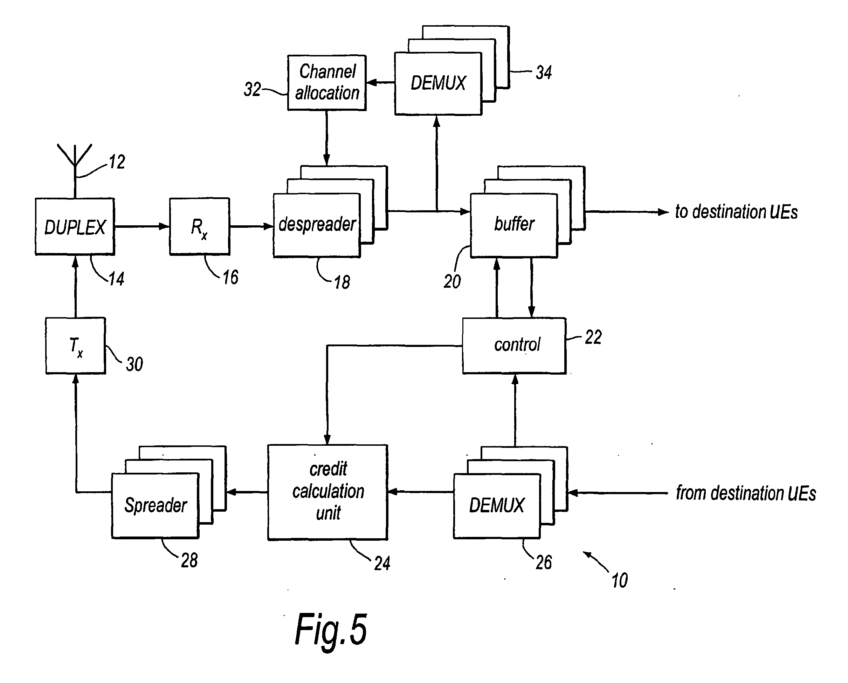

Figure 5 shows parts of a base station in a first embodiment. In operation, the base station receives signals from antenna 12 and passes these signals to duplexer 14. The duplexer separates received signals from signals to be transmitted, and passes the received signals to receiver 16. The receiver down-converts and digitises the received signals, and passes the signals to despreaders 18.

The despreaders 18 use the channelisation codes employed in the uplink to separate the various channels transmitted by the source UEs. Each of the despreaders 18 outputs a channel from a UE for which the base station 10 is an active base station. The choice of which channelisation codes to use, and thus the choice of which uplink channels to receive, is made by channel allocation unit 32.

The outputs of the despreaders 18 are fed to demultiplexers 34. Each of the demultiplexers 34 demultiplexes from the control channel of a particular UE the identification number of the base station(s) which that UE has selected to be an active base station. The various identification numbers are fed to channel allocation unit 32. If the base station 10 has been selected as an active base station by a particular UE, then the channel allocation unit 32 will allocate a data channel for receiving data transmissions from that UE. The base station will then only despread the data channels for which it is an active base station. However, the base station may continue to receive control channels from a UE even when it has not been selected as an active base station. This can allow the base station to become an active base station if required.

As an alternative to the identification number of a selected base station, a flag indicating whether or not the base station has been selected as active may be received from each of the UEs. In this case the base station can tell to which UE the flag belongs based on the coding which has been used in the uplink.

The data packets received from the source UEs for which the base station is an active base station are stored in buffers 20, one buffer being provided for each such source UE. The data packets are output from the buffers 20 under control of control unit 22. The control unit 22 performs a scheduling routine in order to schedule the data packets for transmission to the destination UEs. Depending on the location of the destination UE, the data packets are either transmitted to the destination UE in the base station's own downlink (see Figure 2), or via another base station (see Figure 3) or via an IP-based network (see Figure 4). The control unit 22 also receives information from the buffers 20 concerning the rate of arrival of data packets from the source UEs. This information is output by the control unit 22 to credit calculation unit 24 for use in the credit calculation, as will be explained.

The base station also receives a control channel from each of the destination UEs. The control channels are received either directly from the destination UEs (when the destination UEs are in the cell served by the base station) or else via the network. The control channels are passed to demultiplexers 26, which separate out various types of information contained in the control channels, including information concerning the number of packets received by the destination UEs and the number of failed packets at the destination UEs. This information is also passed to credit calculation unit 24 for use in the credit calculation.

The credit calculation unit 24 calculates a credit value for each of the source UEs. These credit values are output from the credit calculation unit 24 and passed to spreaders 28 for transmission to the respective source UEs via transmitter 30, duplexer 14 and antenna 12. In this embodiment the credit values are transmitted in control channels to the source UEs, although other channels such as data channels could also be used. Similarly the information obtained from the destination UEs may be received in channels other than control channels.

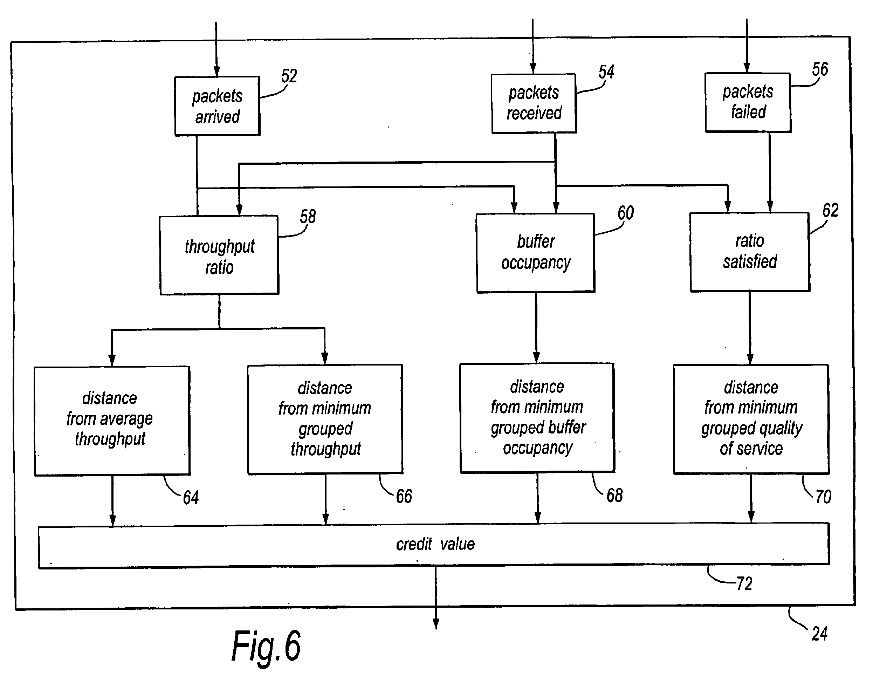

Figure 6 shows in more detail parts of the credit calculation unit 24. Referring to Figure 6, packets arrived indicator 52 indicates the number of packets which have arrived at the base station for each source UE based on the signal received from the control unit 22. Packets received indicator 54 indicates the number of packets received at each of the destination UEs, based on information received in the control channels from the destination UEs. Packets failed indicator 56 indicates the number of failed packets at each of the destination UEs, again based on information received in the control channels from the source UEs.

Throughput ratio calculation unit 58 calculates the throughput ratios for the various UEs in accordance with equation (1) above, using the outputs of packets arrived indicator 52 and packets received indicator 54. Buffer occupancy calculation unit 60 calculates the base station buffer occupancy in accordance with equation (4) above, also using the outputs of packets arrived indicator 52 and packets received indicator 54. Ratio satisfied calculation unit 62 calculates the ratio of satisfied packets in accordance with equations (2) and (3) above, using the outputs of packets arrived indicator 52, packets received indicator 54, and packets failed indicator 56.

Distance from average throughput calculation unit 64 calculates the distance from average throughput in accordance with equations (5) to (8) above, using the outputs of throughput ratio calculation unit 58. Distance from minimum grouped throughput ratio calculation unit 66 calculates the distance from minimum throughput ratio in accordance with equations (10) to (12) above, also using the outputs of throughput ratio calculation unit 58. Distance from minimum grouped buffer occupancy calculation unit 68 calculates the distance from the minimum grouped buffer occupancy in accordance with equations (16) to (18) above, using the outputs from the buffer occupancy calculation unit 60. Distance from minimum grouped quality of service calculation unit 70 calculates the distance from the minimum grouped quality of service in accordance with equations (13) to (15) above, using the outputs from the ratio satisfied calculation unit 62.

The outputs of the distance from minimum grouped throughput ratio calculation unit 66, distance from minimum grouped throughput ratio calculation unit 66, distance from minimum grouped buffer occupancy calculation unit 68, and distance from minimum grouped quality of service calculation unit 70 are fed to final credit value calculation unit 72, which calculates the final credit values for each of the UEs in accordance with equations (19) to (22) above. The final credit values are output from the credit calculation unit 24 for transmission to the respective source UEs.

**User equipment**

A UE which is in soft-handover mode receives a credit value from each of the base stations which are in its active list. The UE may also have historical credit values from the base stations which are in its candidate list. Each of these credit values gives an indication of how good the quality of service is from the source UE through to the destination UE, in comparison to other source UEs in the cell served by the base station.

If a user equipment receives a high credit value from a base station, this indicates that the user equipment is doing well in terms of quality of service, and therefore that the base station is unlikely to be heavily congested. By contrast, if the user equipment receives a low credit value, this indicates that the quality of service is low, and therefore that the base station is likely to be congested. Thus, by basing soft handover decisions on the credit value, the amount of congestion which is being experienced by the base station is taken into account. For example, if a UE receives a very poor credit value from a particular base station, then that base station might be dropped from the active set of base stations involved in the soft handover process, even if the radio channel to the base station is good. The result is much smarter soft handover, in which base stations with a poor quality of service history are rejected and unnecessary traffic congestions are avoided for a wireless packet system for UEs with continuous real-time services.

Each UE receives a credit value from each of the base stations in its active list in each uplink scheduling event (TTI). For the n-th UE at the m-th TTI

$$\mathbf{Received\_Credit}_n(m) = \left\{Distance\_min_{n,p}(m), Distance\_min_{n,q}(m)\right\}$$

$$p=1...P, \quad q=1...Q \quad (27)$$

Each source UE also creates channel profiles of the channels to the base stations, so that

$$\mathbf{Channel}_n(m) = \left\{Ch_{n,p}(m), Ch_{n,q}(m)\right\} \qquad p=1...P, \quad q=1...Q \quad (28)$$

where $Ch_{n,p}(m)$ is the knowledge about the quality of the channel in the uplink from the $k$th source UE to the pth base station. The source UE saves these values in separate buffers assigned to each one of the active or candidate base stations. These saved values shape a multiple credit history. The history of credit values received from the $p$th base station by the nth source UE is

$$\mathbf{Credit\_History}_{n,p}(m) = \left\{Distance\_min_{n,p}(m), \cdots, Distance\_min_{n,p}(m-L)\right\} \quad (29)$$

A history of the channel quality is created in a similar way, so that

$$\mathbf{Channel\_History}_{n,p}(m) = \left\{Ch_{n,p}(m), \cdots, Ch_{n,p}(m-L)\right\} \quad (30)$$

where *L* is the length of history buffer. Each source UE combines the channel history and the credit history to come up with unique credit value for each base station, as follows

$$Combined\_Metric_{n,p}(m) = Combine(\textbf{Channel\_History}_{n,p}(m), \textbf{Credit\_History}_{n,p}(m))$$

$$( \ 31 \ )$$

where *Combine* is a function that combine these metrics. As an example, the Combine function may first take the average of the values of each of the history buffers, and then multiply these average values to form a final combined metric. Suitable weightings could be applied where appropriate; for example more recent values could be given greater weightings than less recent values, and channel history could be given a greater weighting than credit history or *vice versa.* These combined metrics are then used when making decisions on whether to accept of reject base stations in the active set. As an alternative or in addition to the average values of the history buffers, the trends of the data in the history buffers could be used.

In this way, the present embodiment effectively combines uplink scheduling functions and soft handover with a knowledge about the different aspects of the quality of the link to the destination UE from each one of candidate or active base stations in the soft handover set. Consequently, as well as channel quality, the amount of congestion and the history of QoS all are involved in the soft handover decision.

In the present embodiment the soft handover process is combined with an uplink scheduling process. After having updated its set of active and candidate base stations, a source UE then decides on it waiting time and/or transmission rate for the purposes of uplink scheduling. To decide on an appropriate waiting time or transmission rate, the UE combines the latest received credit values from the candidate or active base stations in the soft handover set with its own estimated credit values of each radio channel, to come up with a unique metric or credit value, as follows

$$Decisive\_Metric_n(m) = Comb(\textbf{Received\_Credit}_n(m), \textbf{Channel}_n(m)) \qquad ( \ 31 \ )$$

The combination process *Comb* might be similar to the process *Combine* used in the soft handover decision. However the *Comb* process does not necessarily include the credit history. For example, a source UE might just determine the mean of credit values received from all the active base stations in the current uplink scheduling event.

Each UE depending on its service type has been assigned a maximum acceptable waiting or sleeping time. The value of the sleeping or waiting period is updated every uplink scheduling event (for example, every TTI) by multiplying the current combined credit value Decisive_MetriC$_n$(m) with the maximum acceptable waiting or silent time. The Modulation and Coding Scheme (MCS) level can also be decided based on the combined credit value. In this way the knowledge of the quality of service in the downlink is combined with the existing knowledge about the radio channel conditions in order to give the best transmission format. The result is more success in terms of overall packet delivery delay and a reduction in the delay experienced by real-time services. For example, the recently proposed Multidimensional Rate-Time Hybrid QoS-based Packet Scheduling (MRT-HQPS) or Multidimensional Credit Based Rate Scheduling (MCRS) techniques may be used for the uplink scheduling.

When the delay and silence introduced by time scheduling can not be tolerated in soft-handover mode, another type of uplink scheduling is employed which includes just rate scheduling. In this case all of the admitted source UEs transmit all of the time. In this case, when a UE receives credit values from the active and candidate base stations, it combines these values with its knowledge about the radio channel conditions. The UE then employs these credit values to pick the best MCS (Modulation and Coding Scheme) level from a look-up table of MCS levels.

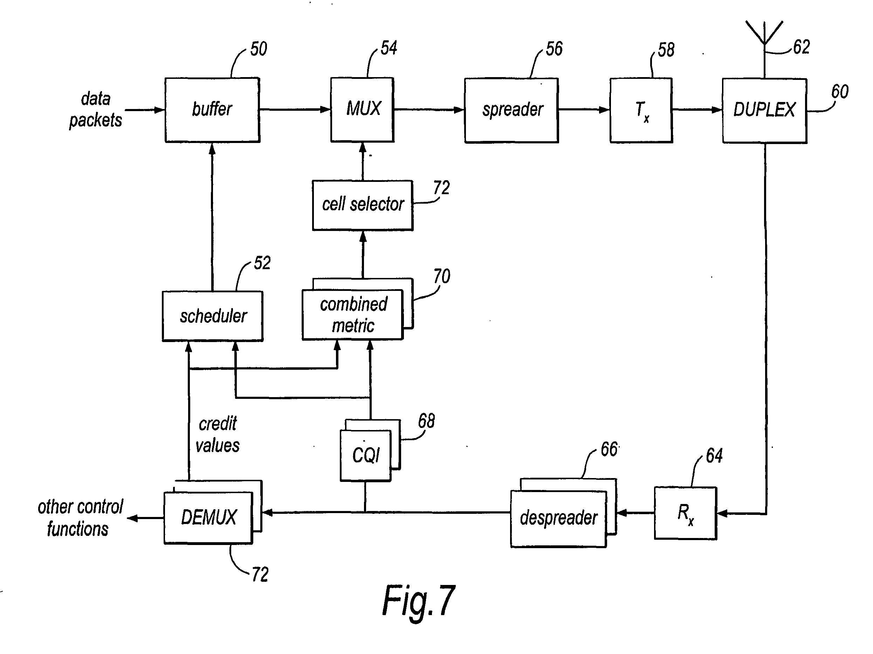

Figure 7 shows parts of a UE in an embodiment of the present invention. Referring to Figure 7, a buffer 50 receives the data packets that are to be transmitted, and stores them on a first-in-first-out basis. The data packets are fed out from the buffer 50 under control of uplink scheduler 52. The data packets which are been fed out of the buffer 50 are multiplexed with a control channel containing a cell selection command in multiplexer 54. The output of multiplexer 54 is fed to spreader 56 where it is given a channelisation code. The thus coded signal is transmitted to the base stations involved in the soft handover process means of transmitter 58, duplexer 60 and antenna 62.

The UE receives incoming signals by means of antenna 62, duplexer 60 and receiver 64. These signals are fed to despreaders 66, which separate out control channels which have been transmitted by the various base stations involved in the soft handover process.

Channel quality indicators 68 estimate the quality of the channels between the UE and each of the base stations.

Any suitable measure of quality can be produced; for example, a received signal strength (RSS) or power measure, a bit error rate (BER) or a frame error rate (FER) measure, or a signal-to-interference ratio (SIR) or a signal-to-interference-and-noise ratio (SINR) measure could be produced. The measure could be based on a pilot signal broadcast by the base station. For example, the strength of the pilot signal could be taken as a measure of signal quality, or the base station may also broadcast the transmit power ratio of a data channel to the pilot channel, and this ratio could be used in conjunction with the pilot signal strength to obtain a measure of signal quality. Alternatively the measure could be derived from transmission power control (TCP) information (such as a power up/power down instruction) generated in the user equipment for downlink power control purposes. Any of the measures could be based on a history or average of measurements taken over several measurement periods. Two or more measures could be combined, if desired. The outputs of the channel quality indicators are fed to scheduler 52 and combined metric calculation units 70.

Demultiplexers 72 demultiplex from the control channels the credit values which have been sent by the base stations to the UE. These credit value are fed to scheduler 52 and combined metric calculation units 70. Other information, such as power control bits, may also be passed to the scheduler 52 and/or the combined metric calculation units 70. The scheduler 52 performs a scheduling routine in order to decide when and at what rate the data packets are fed out from the buffer 50, based on the credit values and the channel quality indicators. For example, the scheduler 52 may use the uplink scheduling techniques described in co-pending United Kingdom patent application entitled "Uplink scheduling" referred to above, or any other appropriate scheduling technique.

Each of the combined metric calculation units 70 calculates a combined metric for one of the base stations in accordance with equation (9) above. The various combined metrics are then fed to cell selection unit 72. Cell selection unit 72 then makes a cell selection decision based on the combined metrics. For example, if one of the combined metrics is much higher than the others, indicating that the base station to which it relates has a consistently good quality of service through to the destination UE and good uplink channel quality compared to the other base stations, then that base station may be selected as the only active base station. If two or more base stations have similar combined metrics, then they may both be selected as active base stations. If a base station has a combined metric which is significantly worse than that of other base stations, then that base station may be dropped as an active base station.

In order to make soft handover, cell selection unit 72 maintains a list of active and candidate base stations. The base stations are ranked in the list in the order of the values of the combined metric. At any one time, the base station with the best combined metric is selected as an active base station. If there are other base stations with combined metrics that are nearly as good, then those base stations may also be selected as an active base stations. A total of, for example, three base stations may be active at any one time. However, if the next best base station is much worse than the best base station, then just the best base station may be selected as the active base station.

The list of active and candidate base stations is continually updated. Thus, if an active base station starts giving a poor combined metric, then it may be dropped from the active list. In this case, the candidate base station with the best combined metric may replace the dropped base station in the active list. In a similar way, base stations may be added to or dropped from the list of candidate base stations.

The cell selection unit 72 outputs the identification number(s) of the selected base station(s) for multiplexing into the control channel for transmission to the base stations. Alternatively the cell selection unit may output a flag indicating whether a base station has been selected as an active base station. In this case the coding employed in the uplink tells the base station which UE the flag belongs to.

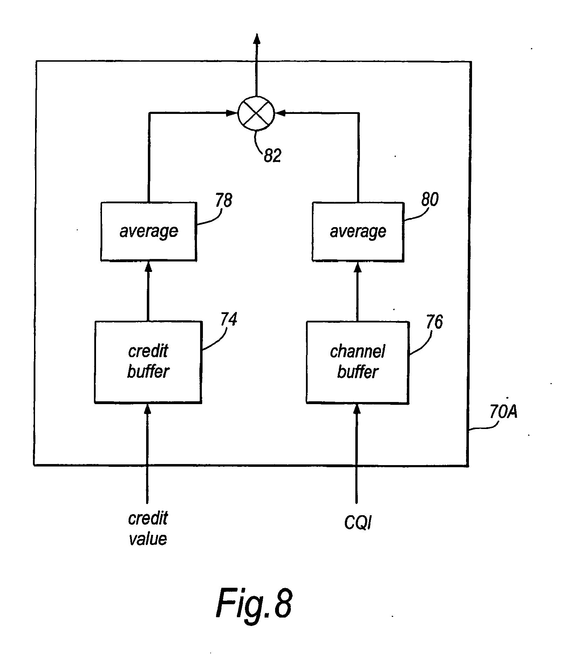

Figure 8 shows parts of one of the combined metric calculation units 70. Referring to Figure 8, combined metric calculation unit 70A receives credit values and channel quality indicators in respect of one of the base stations involved in the soft handover process. The credit values are stored in credit buffer 74, and the channel quality indicators are stored in channel buffer 76. As new values are stored in the buffers 74 and 76, old values are discarded. In this way the buffers store the histories of their respective values over the previous L scheduling events, where L is the length of the buffers. The values which are stored in credit buffer 74 are averaged in average calculation unit 78, and the values which are stored in channel buffer 76 are averaged in average calculation unit 80. If required, suitable weightings are given to the values by the average calculation units 78 and 80; for example more recent values could be given greater weightings than less recent values. The thus calculated average values are then fed to combiner 82. In this example combiner 82 is a multiplier, which multipliers the values from the average calculation units 78 and 80. If required, one or both of the average values could be given a weighting. The output of the combiner 82 is the combined metric which is fed to the cell selection unit 72 in Figure 7.

The outputs of the buffers 74 and 76 may also be fed to trend calculation units (not shown), which may calculate a trend of the data in the corresponding buffer. This may be done, for example, by taking the differential of a straight line fit to the data in the buffer, and then mapping the value of the differential to a value between zero and one. The outputs of such trend calculation units may then be used in making soft handover decisions, either by making them part of the combined metric, or by feeding them separately to cell selection unit 72.

**Example**

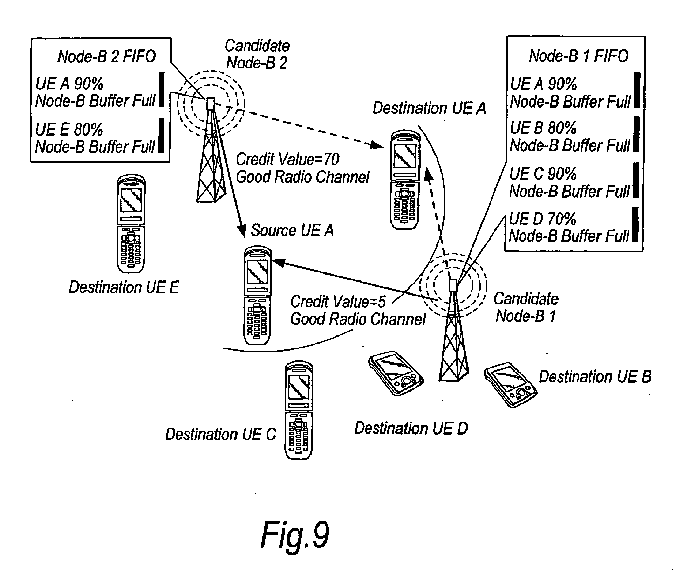

Figure 9 shows an example in which source UE A is evaluating two available base stations in order to transmit its data packets to destination UE A. Source and destination UEs C, D and B are being served by candidate base station Node-B1, and source and destination UE E is being served by base station Node-B2.

In the current uplink scheduling event, source UE A receives two information bytes or credit values. In this example, the first credit value received from Node-B1 is a poor credit value (e.g. 5) and the second credit value received from Node-B2 is a high credit value (e.g. 100). It is assumed that all source UEs experience fairly good radio channel conditions to both candidate base stations. Assuming that the credit history trend is similar for both base stations for the last L TTIs, source UE A by looking at these received metrics realizes that, with a high probability, it is experiencing a bad throughput ratio or ratio of success of delivery through Node-B1 and there are probably UEs with a similar amount of packet data at Node-B1's FIFO buffer, waiting to reach their corresponding destination UEs. Therefore it realizes although it has a similar radio channel conditions to both candidate Node-Bs, if it picks the Node-B1 it will experience more congestion and fierce competition, at least from one of the UEs with a very similar FIFO buffer length, and possibly more delay for packets. Therefore it prefers Node-B2 that has already been providing good credit values.

As discussed above, a credit history is created using the received credit values. The credit history is combined with the credit history about radio channel quality which the UE has built it. This makes the source UE able to make much better, more efficient and smoother decisions to accept or reject any base station from the active and candidate set of base stations by monitoring the trend of the credit history. If a base station keeps giving poorer and degrading credit values (say near zero), the UE realizes that it is getting closer and closer to the UE with minimum QoS, minimum throughput ratio and minimum average throughput. It also realizes that this specific base station is probably facing high congestion, and currently is picking the other destination UEs as favourites. Therefore the source UE considers this base station for rejection from its active set. The result is a packet congestion oriented soft-handover with improved performance. For example, it has been estimated that, compared to a traditional soft handover, up to 20% simultaneous performance improvements in terms of QoS, throughput, 95% percentile delay and delivered bit rate in a mixed service wireless packet multimedia environment are achievable.

Another significant achievement of the techniques discussed above is an improvement in the interference profile at the base stations. By monitoring the situation in the downlink of candidate and active base stations in terms of experienced packet delivery delays, the source UE will automatically reject a base station this is handling too many Ack/ Nack messages. This leads to a situation in which the s.ource UE enjoys less competition and less interference from highly congested base stations.

**Other embodiments**

In other embodiments of the invention the source UEs can receive multiple bytes from each one of the active or candidate Node-Bs. Each byte represents one aspect of QoS provisioning such as the total ratio of delivered data through the base station to the destination UE, QoS of link from the base station to the destination UE, or a figure representing the amount of traffic congestion, either on the downlink or through other base stations or a wired network. The UE has multiple queues for the credit histories of the information bytes or credit values received from each base station. In this case the UE is able to look at both the received comparative multidimensional metric and individual QoS features which may lead to a better decision on the active and candidate handover set of the base station.

Due to the global knowledge and overview of the RNC together with the fact that some soft handover capabilities already exist in the RNC, it might be preferred to leave the final soft handover decisions to the RNC. If this is the case, and the slow pace of information update at the RNC and its timing mismatch to downlink scheduling timing can be tolerated, and also the necessary communications for transfer of multidimensional information to higher layers and extra network-layer overhead calculations can be afforded by the RNC, then in this case the current combined multidimensional credit values (e.g. two information bytes) are sent to the RNC. The result is a multidimensional credit-oriented, hybrid of uplink scheduling and soft handover, in which the final decisions are made by the RNC. In this case, the RNC determines the Cell_Up and Cell_Down commands and makes soft handover decisions by considering the multidimensional credit values which are available to it.

It will be understood that the present invention has been described above purely by way of example, and modifications of detail can be made within the scope of the invention. The various embodiments which have been described above may be implemented using software modules running on a processor, for example a digital signal processor, or any other type of processor. The programming of such modules will be apparent to the skilled person from the description of the various functions. The skilled person will appreciate that such modules may be programmed on any appropriate processor using any appropriate programming language. Alternatively, some or all of the functions described above may be implemented using dedicated hardware. The invention is defined by the appended claims.

**Claims**

1. A method of selecting a base station as an active base station (BS) for use during soft handover, the active base station being for receiving data from a source user equipment (UE) for onward transmission to a destination user equipment (UE), the method comprising:

   determining a measure of a quality of service from the base station (BS) to the destination user equipment (UE), and
   selecting the base station as an active base station based on the measure of the quality of service.

2. The method according to claim 1, further comprising the steps of determining a credit value based on the measure of the quality of service, and transmitting the credit value from the base station (BS) to the source user equipment (UE).

3. The method according to claim 2, wherein the source user equipment (UE) receives the credit value from the base station (BS) and selects the base station as an active base station based on the credit value.

4. The method according to claim 3, wherein a credit value is determined for each of a plurality of source user equipments.

5. The method according to any of the preceding claims, wherein a plurality of different measures of the quality of service from the base station (BS) to a destination user equipment (UE) are determined.

6. The method according to any of the preceding claims, wherein at least one of the following measures of quality of service is determined:

   (a) throughput ratio
   (b) ratio of satisfied packets
   (c) base station buffer occupancy.

7. The method according to any of the preceding claims, wherein a credit value is determined for each of a plurality of source user equipments by comparing measures of a quality of service from the base station (BS) to a plurality of destination user equipments.

8. The method according to claim 7, wherein the credit value is based on at least one of the following relative measures:

   (a) distance from average throughput
   (b) distance from minimum throughput ratio
   (c) distance from minimum quality of service
   (d) distance from minimum buffer length

9. The method according to claim 7 or 8, wherein the credit value is based on a plurality of relative measures, and is a single value obtained by combining the relative measures.

10. The method according to any of the preceding claims wherein the source user equipment (UE) receives credit values from the base station, and selects the base station (BS) as an active base station based on a history of the credit values.

11. The method according to claim 10, wherein the source user equipment (UE) with an improving history of credit values from the base station selects that base station as an active base station.

12. The method according to claim 11, wherein the source user equipment with a worsening history of credit values from the base station deselects that base station as an active base station.

13. The method according to any of the preceding claims, wherein the base station (BS) is selected as an active base station based additionally on a measure of radio channel conditions from the source user equipment to the base station.

14. The method according to claim 13, wherein the base station is selected as an active base station based on a history of radio channel conditions.

15. The method according to any of the preceding claims, where the selection step is carried out by the user equipment (UE) and the method further comprising a step of transmitting an indication of the base station being selected from the user equipment to the base station.

16. The method according to any of the preceding claims, further comprising the step of scheduling uplink transmissions in dependence on the measure of a quality of service.

17. The method according to claim 16, wherein the source user equipment (UE) receives a credit value based on the measure of a quality of service and determines a time and/or rate of packet transmission based on the credit value.

18. The method according to any of the preceding claims, the method being repeated periodically.

19. The method according to any of the preceding claims, wherein the base station (BS) transmits data to the destination user equipment in its downlink.

20. The method according to any of the preceding claims, wherein the base station (BS) transmits data to the destination user equipment via a network.

21. A base station (BS) for receiving data packets in an uplink from a source user equipment (UE) for onward transmission to a destination user equipment, the base station comprising:

means for determining a measure of a quality of service from the base station to the destination user equipment;
means for producing a credit value based on the measure of the quality of service;
means for transmitting the credit value to the source user equipment;
means for receiving from the source user equipment an indication of whether the base station has been selected as an active base station; and
means for allocating a channel to the source user equipment if the base station has been selected as an active base station.

22. The base station (BS) according to claim 21, wherein a credit value is determined for each of a plurality of source user equipments.

23. The base station (BS) according to claim 21 or 22, wherein the credit value is based on a plurality of different measures of the quality of service from the base station to the destination user equipment.

24. The base station (BS) according to any of claims 21 to 23, wherein a credit value is determined for each of a plurality of source user equipments by comparing measures of a quality of service from the base station to a plurality of destination user equipments.

25. The base station (BS) according to any of claims 21 to 24, wherein the credit value is based on a plurality of relative measures, and is a single value obtained by combining the relative measures.

26. A user equipment (UE) for transmitting data to a destination user equipment via one or more base stations using soft handover, the user equipment comprising:

means for receiving a credit value from a base station, the credit value being based on a measure of a quality of service from the base station to the destination user equipment; and
means for selecting the base station as an active base station based on the credit value.

27. The user equipment (UE) according to claim 26, further comprising means for storing a history of credit values, and wherein the selecting means is arranged to select the base station as an active base station based on the history of credit values.

28. The user equipment (UE) according to claim 26 or 27, further comprising means for determining a measure of radio channel conditions from the user equipment to the base station, and wherein the selecting means is arranged to select the base station as an active base station based additionally on the measure of radio channel conditions.

**29.** The user equipment (UE) according to claim 28, further comprising means for storing a history of radio channel conditions, and wherein the selecting means is arranged to select the base station as an active base station based on the history of radio channel conditions.

**30.** The user equipment (UE) according to any of claims 26 to 29, further comprising means for transmitting an indication of the base station being selected to the base station.

**31.** The user equipment (UE) according to any of claims 26 to 30, further comprising means for scheduling uplink transmissions in dependence on the credit value.

**32.** A communications system comprising a base station (BS) according to any of claims 21 to 25 and a user equipment (UE) according to any of claims 26 to 31.

**Patentansprüche**

**1.** Verfahren zum Wählen einer Basisstation als eine aktive Basisstation (BS) zur Nutzung während eines Soft-Handovers, wobei die aktive Basisstation dem Empfangen von Daten von einer Quellenbenutzerausrüstung (UE) dient zur weiteren Übertragung an eine Zielbenutzerausrüstung (UE), wobei das Verfahren umfasst:

ein Bestimmen eines Maßes einer Dienstgüte von der Basisstation (BS) zu der Zielbenutzerausrüstung (UE); und ein Wählen der Basisstation als eine aktive Basisstation basierend auf dem Maß der Dienstgüte.

**2.** Verfahren nach Anspruch 1, ferner umfassend die Schritte eines Bestimmens eines Kreditwerts basierend auf dem Maß der Dienstgüte und eines Übertragens des Kreditwerts von der Basisstation (BS) zu der Quellenbenutzerausrüstung (UE).

**3.** Verfahren nach Anspruch 2, wobei die Quellenbenutzerausrüstung (UE) den Kreditwert von der Basisstation (BS) empfängt und die Basisstation als eine aktive Basisstation basierend auf dem Kreditwert wählt.

**4.** Verfahren nach Anspruch 3, wobei ein Kreditwert für jede aus einer Vielzahl von Quellenbenutzerausrüstungen bestimmt wird.

**5.** Verfahren nach einem der vorangehenden Ansprüche, wobei eine Vielzahl von verschiedenen Maßen der Dienstgüte von der Basisstation (BS) zu einer Zielbenutzerausrüstung (UE) bestimmt wird.

**6.** Verfahren nach einem der vorangehenden Ansprüche, wobei wenigstens eines der folgenden Maße von Dienstgüte bestimmt wird:

(a) Durchsatzverhältnis
(b) Verhältnis von erfüllten Paketen
(c) Basisstation-Pufferbelegung.

**7.** Verfahren nach einem der vorangehenden Ansprüche, wobei ein Kreditwert bestimmt wird für jede aus einer Vielzahl von Quellenbenutzerausrüstungen durch ein Vergleichen von Maßen einer Dienstgüte von der Basisstation (BS) zu einer Vielzahl von Zielbenutzerausrüstungen.

**8.** Verfahren nach Anspruch 7, wobei der Kreditwert auf wenigstens einem der folgenden relativen Maßen basiert:

(a) Abstand vom Durchschnittsdurchsatz
(b) Abstand vom minimalen Durchsatzverhältnis
(c) Abstand von der minimalen Dienstgüte
(d) Abstand von der minimalen Pufferlänge

**9.** Verfahren nach Anspruch 7 oder 8, wobei der Kreditwert auf einer Vielzahl von relativen Maßen basiert und ein einzelner Wert ist, der durch ein Kombinieren der relativen Maße erhalten wird.

**10.** Verfahren nach einem der vorangehenden Ansprüchen, wobei die Quellenbenutzerausrüstung (UE) Kreditwerte von der Basisstation empfängt und die Basisstation (BS) als eine aktive Basisstation wählt, basierend auf einer Historie der Kreditwerte.

11. Verfahren nach Anspruch 10, wobei die Quellenbenutzerausrüstung (UE) mit einer sich verbessernden Historie von Kreditwerten von der Basisstation die Basisstation als eine aktive Basisstation wählt.

12. Verfahren nach Anspruch 11, wobei die Quellenbenutzerausrüstung mit einer sich verschlechternden Historie von Kreditwerten von der Basisstation die Basisstation als eine aktive Basisstation abwählt.

13. Verfahren nach einem der vorangehenden Ansprüche, wobei die Basisstation (BS) als eine aktive Basisstation gewählt wird, zusätzlich basierend auf einem Maß von Funkkanalbedingungen von der Quellenbenutzerausrüstung zu der Basisstation.

14. Verfahren nach Anspruch 13, wobei die Basisstation als eine aktive Basisstation gewählt wird, basierend auf einer Historie von Funkkanalbedingungen.

15. Verfahren nach einem der vorangehenden Ansprüche, wobei der Auswahlschritt durch die Benutzerausrüstung (UE) ausgeführt wird und das Verfahren ferner einen Schritt eines Übertragens eine Indikation der Basisstation, die gewählt wird, von der Benutzerausrüstung zu der Basisstation umfasst.

16. Verfahren nach einem der vorangehenden Ansprüche, ferner umfassend den Schritt eines Einplanens von Uplink-Übertragungen abhängig von dem Maß einer Dienstgüte.

17. Verfahren nach Anspruch 16, wobei die Quellenbenutzerausrüstung (UE) einen Kreditwert basierend auf dem Maß einer Dienstgüte empfängt und eine Zeit und/oder Rate von Paketübertragung bestimmt, basierend auf dem Kreditwert.

18. Verfahren nach einem der vorangehenden Ansprüche, wobei das Verfahren periodisch wiederholt wird.

19. Verfahren nach einem der vorangehenden Ansprüche, wobei die Basisstation (BS) Daten an die Zielbenutzerausrüstung auf ihren Downlink überträgt.

20. Verfahren nach einem der vorangehenden Ansprüche, wobei die Basisstation (BS) Daten an die Zielbenutzerausrüstung über ein Netzwerk überträgt.

21. Basisstation (BS) zum Empfangen von Datenpaketen in einem Uplink von einer Quellenbenutzerausrüstung (UE) zur weiteren Übertragung an eine Zielbenutzerausrüstung, wobei die Basisstation umfasst:

   Mittel zum Bestimmen eines Maßes einer Dienstgüte von der Basisstation zu der Zielbenutzerausrüstung;
   Mittel zum Erzeugen eines Kreditwerts basierend auf dem Maß der Dienstgüte;
   Mittel zum Übertragen des Kreditwerts an die Quellenbenutzerausrüstung;
   Mittel zum Empfangen, von der Quellenbenutzerausrüstung, einer Indikation, ob die Basisstation als eine aktive Basisstation gewählt wurde; und
   Mittel zum Zuweisen eines Kanals an die Quellenbenutzerausrüstung, falls die Basisstation als eine aktive Basisstation gewählt wurde.

22. Basisstation (BS) nach Anspruch 21, wobei ein Kreditwert für jede aus einer Vielzahl von Quellenbenutzerausrüstungen bestimmt wird.

23. Basisstation (BS) nach Anspruch 21 oder 22, wobei der Kreditwert auf einer Vielzahl von verschiedenen Maßen der Dienstgüte von der Basisstation zu der Zielbenutzerausrüstung basiert.

24. Basisstation (BS) nach einem der Ansprüche 21-23, wobei ein Kreditwert für jede aus einer Vielzahl von Quellenbenutzerausrüstungen bestimmt wird, indem Maße einer Dienstgüte von der Basisstation von einer Vielzahl von Zielbenutzerausrüstungen verglichen werden.

25. Basisstation (BS) nach einem der Ansprüche 21-24, wobei der Kreditwert auf einer Vielzahl von relativen Maßen basiert, und ein einzelner Wert ist, der durch ein Kombinieren der relativen Maße erhalten wird.

**26.** Benutzerausrüstung (UE) zum Übertragen von Daten an eine Zielbenutzerausrüstung über eine oder mehr Basisstationen unter Nutzung von Soft-Handover, wobei die Benutzerausrüstung umfasst:

Mittel zum Empfangen eines Kreditwerts von einer Basisstation, wobei der Kreditwert auf einem Maß einer Dienstgüte von der Basisstation zu der Zielbenutzerausrüstung basiert; und
Mittel zum Wählen der Basisstation als eine aktive Basisstation, basierend auf dem Kreditwert.

**27.** Benutzerausrüstung (UE) nach Anspruch 26, ferner umfassend Mittel zum Speichern einer Historie von Kreditwerten, und wobei das Auswahlmittel ferner eingerichtet ist, die Basisstation als eine aktive Basisstation zu wählen, basierend auf der Historie von Kreditwerten.

**28.** Benutzerausrüstung (UE) nach Anspruch 26 oder 27, ferner umfassend Mittel zum Bestimmen eines Maßes von Funkkanalbedingungen von der Benutzerausrüstung an die Basisstation, und wobei die Auswahlmittel eingerichtet sind, die Basisstation als eine aktive Basisstation zu wählen, zusätzlich basierend auf dem Maß von Funkkanalbedingungen.

**29.** Benutzerausrüstung (UE) nach Anspruch 28, ferner umfassend Mittel zum Speichern einer Historie von Funkkanalbedingungen, und wobei das Auswahlmittel eingerichtet ist, die Basisstation als eine aktive Basisstation zu wählen, basierend auf der Historie von Funkkanalbedingungen.

**30.** Benutzerausrüstung (UE) nach einem der Ansprüche 26-29, ferner umfassend Mittel zum Übertragen einer Indikation der Basisstation, die gewählt wird, an die Basisstation.

**31.** Benutzerausrüstung (UE) nach einem der Ansprüche 26-30, ferner umfassend Mittel zum Einplanen von Uplink-Übertragungen in Abhängigkeit von dem Kreditwert.

**32.** Kommunikationssystem umfassend eine Basisstation (BS) gemäß einem der Ansprüche 21-25 und eine Benutzerausrüstung (UE) gemäß einem der Ansprüche 26-31.

## Revendications

**1.** Procédé de sélection d'une station de base comme une station de base active (BS) pour une utilisation pendant un transfert intercellulaire sans coupure, la station de base active étant destinée à recevoir des données en provenance d'un équipement d'utilisateur source (UE) pour leur transmission à un équipement d'utilisateur de destination (UE), le procédé comprenant :

la détermination d'une mesure d'une qualité de service de la station de base (BS) à l'équipement d'utilisateur de destination (UE) ; et
la sélection de la station de base comme une station de base active sur la base de la mesure de la qualité de service.

**2.** Procédé selon la revendication 1, comprenant en outre les étapes consistant à déterminer une valeur de crédit sur la base de la mesure de la qualité de service, et transmettre la valeur de crédit de la station de base (BS) à l'équipement d'utilisateur source (UE).

**3.** Procédé selon la revendication 2, dans lequel l'équipement d'utilisateur source (UE) reçoit la valeur de crédit de la station de base (BS) et sélectionne la station de base comme une station de base active sur la base de la valeur de crédit.

**4.** Procédé selon la revendication 3, dans lequel une valeur de crédit est déterminée pour chacun d'une pluralité d'équipements d'utilisateur source.

**5.** Procédé selon l'une quelconque des revendications précédentes, dans lequel une pluralité de mesures différentes de la qualité de service de la station de base (BS) à un équipement d'utilisateur de destination (UE) sont déterminées.

**6.** Procédé selon l'une quelconque des revendications précédentes, dans lequel au moins une des mesures de qualité de service suivantes est déterminée :

(a) le rapport de débit
(b) le rapport de paquets satisfaits
(c) l'occupation du tampon de station de base.

7. Procédé selon l'une quelconque des revendications précédentes, dans lequel une valeur de crédit est déterminée pour chacun d'une pluralité d'équipements d'utilisateur source en comparant des mesures d'une qualité de service de la station de base (BS) à une pluralité d'équipements d'utilisateur de destination.

8. Procédé selon la revendication 7, dans lequel la valeur de crédit est basée sur au moins une des mesures relatives suivantes :

(a) la distance par rapport au débit moyen
(b) la distance par rapport au rapport de débit minimal
(c) la distance par rapport à la qualité de service minimale
(d) la distance par rapport à la longueur de tampon minimale.

9. Procédé selon la revendication 7 ou 8, dans lequel la valeur de crédit est basée sur une pluralité de mesures relatives, et est une valeur unique obtenue en combinant les mesures relatives.

10. Procédé selon l'une quelconque des revendications précédentes, dans lequel l'équipement d'utilisateur source (UE) reçoit des valeurs de crédit de la station de base, et sélectionne la station de base (BS) comme une station de base active sur la base d'un historique des valeurs de crédit.

11. Procédé selon la revendication 10, dans lequel l'équipement d'utilisateur source (UE) avec un historique de valeurs de crédit s'améliorant de la station de base sélectionne cette station de base comme une station de base active.

12. Procédé selon la revendication 11, dans lequel l'équipement d'utilisateur source avec un historique de valeurs de crédit se dégradant de la station de base désélectionne cette station de base comme une station de base active.

13. Procédé selon l'une quelconque des revendications précédentes, dans lequel la station de base (BS) est sélectionnée comme une station de base active en outre sur la base d'une mesure de conditions de canal radio de l'équipement d'utilisateur source à la station de base.

14. Procédé selon la revendication 13, dans lequel la station de base est sélectionnée comme une station de base active sur la base d'un historique de conditions de canal radio.

15. Procédé selon l'une quelconque des revendications précédentes, dans lequel l'étape de sélection est effectuée par l'équipement d'utilisateur (UE) et le procédé comprenant en outre une étape consistant à transmettre une indication de la station de base qui est sélectionnée de l'équipement d'utilisateur à la station de base.

16. Procédé selon l'une quelconque des revendications précédentes, comprenant en outre l'étape consistant à ordonnancer des transmissions de liaison montante en fonction de la mesure d'une qualité de service.

17. Procédé selon la revendication 16, dans lequel l'équipement d'utilisateur source (UE) reçoit une valeur de crédit sur la base de la mesure d'une qualité de service et détermine un temps et/ou un taux de transmission de paquets sur la base de la valeur de crédit.

18. Procédé selon l'une quelconque des revendications précédentes, le procédé étant répété périodiquement.

19. Procédé selon l'une quelconque des revendications précédentes, dans lequel la station de base (BS) transmet des données à l'équipement d'utilisateur de destination dans sa liaison descendante.

20. Procédé selon l'une quelconque des revendications précédentes, dans lequel la station de base (BS) transmet des données à l'équipement d'utilisateur de destination via un réseau.

21. Station de base (BS) destinée à recevoir des paquets de données dans une liaison montante en provenance d'un équipement d'utilisateur source (UE) pour leur transmission à un équipement d'utilisateur de destination, la station de base comprenant :

des moyens pour déterminer une mesure d'une qualité de service de la station de base à l'équipement d'utilisateur de destination ;

des moyens pour produire une valeur de crédit sur la base de la mesure de la qualité de service ;

des moyens pour transmettre la valeur de crédit à l'équipement d'utilisateur source ;

des moyens pour recevoir de l'équipement d'utilisateur source une indication de si la station de base a été sélectionnée comme une station de base active ; et

des moyens pour allouer un canal à l'équipement d'utilisateur source si la station de base a été sélectionnée comme une station de base active.

22. Station de base (BS) selon la revendication 21, dans laquelle une valeur de crédit est déterminée pour chacun d'une pluralité d'équipements d'utilisateur source.

23. Station de base (BS) selon la revendication 21 ou 22, dans laquelle la valeur de crédit est basée sur une pluralité de mesures différentes de la qualité de service de la station de base à l'équipement d'utilisateur de destination.

24. Station de base (BS) selon l'une quelconque des revendications 21 à 23, dans laquelle une valeur de crédit est déterminée pour chacune d'une pluralité d'équipements d'utilisateur source en comparant des mesures d'une qualité de service de la station de base à une pluralité d'équipements d'utilisateur de destination.

25. Station de base (BS) selon l'une quelconque des revendications 21 à 24, dans laquelle la valeur de crédit est basée sur une pluralité de mesures relatives, et est une valeur unique obtenue en combinant les mesures relatives.

26. Equipement d'utilisateur (UE) destiné à transmettre des données à un équipement d'utilisateur de destination via une ou plusieurs stations de base en utilisant un transfert intercellulaire sans coupure, l'équipement d'utilisateur comprenant :

des moyens pour recevoir une valeur de crédit en provenance d'une station de base, la valeur de crédit étant basée sur une mesure d'une qualité de service de la station de base à l'équipement d'utilisateur de destination ; et

des moyens pour sélectionner la station de base comme une station de base active sur la base de la valeur de crédit.

27. Equipement d'utilisateur (UE) selon la revendication 26, comprenant en outre des moyens pour stocker un historique de valeurs de crédit, et dans lequel les moyens de sélection sont agencés pour sélectionner la station de base comme une station de base active sur la base de l'historique de valeurs de crédit.

28. Equipement d'utilisateur (UE) selon la revendication 26 ou 27, comprenant en outre des moyens pour déterminer une mesure de conditions de canal radio de l'équipement d'utilisateur à la station de base, et dans lequel les moyens de sélection sont agencés pour sélectionner la station de base comme une station de base active en outre sur la base de la mesure de conditions de canal radio.

29. Equipement d'utilisateur (UE) selon la revendication 28, comprenant en outre des moyens pour stocker un historique de conditions de canal radio, et dans lequel les moyens de sélection sont agencés pour sélectionner la station de base comme une station de base active sur la base de l'historique de conditions de canal radio.

30. Equipement d'utilisateur (UE) selon l'une quelconque des revendications 26 à 29, comprenant en outre des moyens pour transmettre une indication de la station de base qui est sélectionnée à la station de base.

31. Equipement d'utilisateur (UE) selon l'une quelconque des revendications 26 à 30, comprenant en outre des moyens pour ordonnancer des transmissions de liaison montante en fonction de la valeur de crédit.

32. Système de communications comprenant une station de base (BS) selon l'une quelconque des revendications 21 à 25 et un équipement d'utilisateur selon l'une quelconque des revendications 26 à 31.

CORE NETWORK

RNS 1
RNC 1
BS1
BS2

RNS 2
RNC 2
BS3
BS4
BS5

RNS 3
RNC 3
BS6
BS7

UE1
UE2
UE3
UE4
UE5
UE6

Fig.1

EP 1 668 946 B1

Destination UE

Candidate
Base Station 1

Source UE

Candidate
Base Station 2

Fig.2

Fig.3

Destination UE

IP-based Network

Candidate
Base Station 1

Source UE

Candidate
Base Station 2

*Fig.4*

Fig.5

```
                    ┌──────────┐ ⟋52        ┌──────────┐ ⟋54        ┌──────────┐ ⟋56
                    │ packets  │             │ packets  │             │ packets  │
                    │ arrived  │             │ received │             │  failed  │
                    └──────────┘             └──────────┘             └──────────┘
```

|  | |  |
|---|---|---|
| throughput ratio ⟋58 | buffer occupancy ⟋60 | ratio satisfied ⟋62 |

| distance from average throughput | distance from minimum grouped throughput | distance from minimum grouped buffer occupancy | distance from minimum grouped quality of service |
|---|---|---|---|
| 64 | 66 | 68 | 70 |

| credit  value |
|---|
| 72 |

24

## Fig.6

EP 1 668 946 B1

data
packets → [buffer] 50 → [MUX] 54 → [spreader] 56 → [$T_x$] 58 → [DUPLEX] 60 — antenna 62

[cell selector] 72

[scheduler] 52   [combined metric] 70

credit
values

[CQI] 68

other control
functions ← [DEMUX] 72 ← [despreader] 66 ← [$R_x$] 64

*Fig.7*

Fig.8

EP 1 668 946 B1

Fig.9

32

**EP 1 668 946 B1**

## REFERENCES CITED IN THE DESCRIPTION

### Patent documents cited in the description

- EP 1284583 A

- WO 0124568 A